# EUROPÄISCHE PATENTSCHRIFT

(11) **EP 3 475 998 B1**
(45) Veröffentlichungstag und Bekanntmachung des Hinweises auf die Patenterteilung: **02.06.2021**
(21) Anmeldenummer: 17736579.8
(22) Anmeldetag: 19.06.2017
(51) Int. Cl.: H01M 50/20, H01M 50/50

(54) **AKKUMULATORMODUL**
ACCUMULATOR MODUL
MODULE D'ACCUMULATEUR

(30) Priorität: 22.06.2016 DE 202016103300 U
(43) Veröffentlichungstag der Anmeldung: 01.05.2019
(73) Patentinhaber: Commeo GmbH, 49134 Wallenhorst (DE)
(72) Erfinder: SCHNAKENBERG, Michael, 49134 Wallenhorst (DE)
(74) Vertreter: Werner & ten Brink
(86) Internationale Anmeldenummer: PCT/EP2017/064983
(87) Internationale Veröffentlichungsnummer: WO 2017/220515

(56) Entgegenhaltungen:
- WO-A1-2015/042295
- DE-A1-102013 008 641
- US-A1- 2005 208 375
- US-A1- 2013 011 719

## Beschreibung

Die Erfindung betrifft allgemein eine grundsätzlich an sich bekannte Vorrichtung zur Speicherung elektrischer Energie und zur Kontaktierung davon umfasster Energiespeicherzellen, also eine als Energiespeicher fungierende Vorrichtung (Energiespeichervorrichtung). Die DE 10 2012 213 273 A1 beschreibt eine Energiespeichervorrichtung für ein Fahrzeug. Allgemein werden Energiespeichervorrichtungen zur mobilen Energieversorgung, zur Notstromversorgung und dergleichen verwendet.

Vorrichtungen mit einer Mehrzahl jeweils davon aufgenommener Energiespeicherzellen, also Akkumulatormodule im Sinne der Erfindung, sind an sich bekannt, zum Beispiel aus der US 2005/0208375 A1, der US 2013/0011719 A1, der WO 2015/042295 A1 oder der DE 10 2013 008 641 A1.

Eine Aufgabe der vorliegenden Erfindung besteht darin, eine kompakte und modulare, im Folgenden als Akkumulatormodul bezeichnete Energiespeichervorrichtung anzugeben.

Kurz gefasst schlägt die Erfindung ein Akkumulatormodul mit einem oder mehreren davon aufgenommenen Akkuzellen vor, welches mit anderen gleichen oder gleichartigen Akkumulatormodulen auf einfachste Art und Weise mechanisch und elektrisch kombinierbar ist.

Die oben genannte Aufgabe wird erfindungsgemäß mittels eines als Energiespeichervorrichtung fungierenden Akkumulatormoduls mit den Merkmalen des Anspruchs 1 gelöst. Bei einem solchen Akkumulatormodul mit einer quaderförmigen Außenkontur mit sechs Flächen fungieren zwei einander gegenüberliegende Flächen als front- und rückseitige Anschluss- und/oder Anreihflächen, zwei weitere einander gegenüberliegende Flächen als Bodenfläche und Deckelfläche und die restlichen Flächen als Seitenflächen. Ein solches Akkumulatormodul ist über jeweils eine der Anschluss- und/oder Anreihflächen mit einem weiteren Akkumulatormodul und einer von dessen Anschluss- und/oder Anreihflächen elektrisch und mechanisch ohne Verwendung von Werkzeugen (werkzeuglos) kombinierbar.

Eine Besonderheit des hier vorgeschlagenen Akkumulatormoduls besteht in der aufgrund der beschriebenen elektrischen und mechanischen Kombinierbarkeit resultierenden Anreihbarkeit. Ein Akkumulatormodul kann werkzeuglos mit einem weiteren Ackumulatormodul kombiniert werden, sodass eine elektrische und mechanische / geometrische Einheit entsteht. Mit einer solchen Kombination kann ebenfalls werkzeuglos ein weiteres Ackumulatormodul kombiniert werden und die resultierende Kombination bildet ebenfalls eine elektrische und mechanische / geometrische Einheit. Bei einem würfelförmigen Akkumulatormodul entsteht so bei einer Kombination mehrerer Akkumulatormodule als mechanische / geometrische Einheit ein quaderförmiger Strang von Akkumulatormodulen. Ein solcher Strang kann grundsätzlich beliebig viele Akkumulatormodule umfassen, zum Beispiel zwei Akkumulatormodule, drei Akkumulatormodule, vier Akkumulatormodule usw.

Ein solches im Folgenden mitunter aufgrund einer möglichen, optionalen geometrischen Grundform kurz als Würfel bezeichnetes Akkumulatormodul der vorstehend beschriebenen Art ist die Basis für ein modular erweiterbares System zum Vorhalten und Speichern elektrischer Energie.

Indem sich in dem oder jedem Akkumulatormodul eine Akkuzelle oder eine Mehrzahl von Akkuzellen befindet, kann jedes Akkumulatormodul - jeder "Würfel" - als Energieblock (energy block) aufgefasst und bezeichnet werden und fungiert jedenfalls als Energiespeichervorrichtung. Die Anwendung eines oder mehrerer solcher Akkumulatormodule kommt in der Industrie, insbesondere industriellen Fertigungsprozessen, in unterbrechungsfreien Spannungsversorgungen für den IT-Bereich, bei Kommunikationseinrichtungen, insbesondere Telekommunikationseinrichtungen, in Fahrzeugen, insbesondere Elektrofahrzeugen oder Elektrohybridfahrzeugen, als Energiespeicher im Zusammenhang mit der Erzeugung und Verteilung elektrischer Energie aufgrund einer Nutzung erneuerbarer Energien sowie im Logistikbereich, zum Beispiel als Energiequelle für elektrisch betriebene Gabelstapler, Hubwagen und dergleichen, in Betracht.

Bei dem Akkumulatormodul ist in dessen frontseitiger Anreihfläche ein erstes (frontseitiges) Anschluss- / Anreihprofil und in der rückseitigen Anreihfläche ein zweites (rückseitiges) Anschluss- / Anreihprofil gebildet. Mittels dieser Anschluss- / Anreihprofile ist ein erstes Akkumulatormodul mit einem weiteren Akkumulatormodul durch Kombination des frontseitigen Anschlussprofils des ersten Akkumulatormoduls mit dem rückseitigen Anschlussprofil des weiteren Akkumulatormoduls und durch formschlüssigen Eingriff des frontseitigen Anschlussprofils des ersten Akkumulatormoduls in das rückseitige Anschlussprofil des weiteren Akkumulatormoduls verbindbar. Die beiden Anschluss- / Anreihprofile bilden gewissermaßen die beiden Seiten einer Steckverbindung und mittels dieser Anschluss- / Anreihprofile sind jeweils zwei Akkumulatormodule werkzeuglos zu einer mechanischen und geometrischen Einheit verbindbar.

Bei einem Akkumulatormodul mit in dieser Weise als die beiden Seiten einer Steckverbindung fungierenden Anschluss- / Anreihprofilen ist das erste Anschlussprofil gegenüber einer Hüllfläche des Akkumulatormoduls zurückgesetzt und das zweite Anschlussprofil in entsprechender Weise erhaben, also zum formschlüssigen Eingriff in ein in dieser Weise zurückgesetztes erstes Anschlussprofil eines weiteren Akkumulatormoduls ausgebildet. Dies ist eine vergleichsweise einfache Profilform, die sich aber dadurch auszeichnet, dass die zugrunde liegenden Formen leicht herstellbar sind und dem Akkumulatormodul auch eine optisch ansprechende Anmutung verleihen.

Ein in diesem Sinne leicht herstellbares Anschluss- / Anreihprofil zeichnet sich dadurch aus, dass eine Randlinie des ersten und zweiten Anschluss- / Anreihprofils der geometrischen Form der Randlinie des Akkumulatormoduls entspricht. Bei einem quaderförmigen Akkumulatormodul mit einer rechteckigen oder quadratischen Randlinie ist also auch die Randlinie der ersten und zweiten Anschluss- / Anreihprofile rechteckig bzw. quadratisch.

Des Weiteren weist das Akkumulatormodul in beiden Anschluss- und/oder Anreihflächen einen Anschluss zumindest zum elektrisch leitenden Kontaktieren des Akkumulatormoduls auf, wobei der oder jeder Anschluss symmetrisch bezüglich einer mittig durch die beiden Anschluss- und/oder Anreihflächen verlaufenden Mittellängsachse des Akkumulatormoduls angeordnet ist. Dies erlaubt eine besonders flexible elektrische Kontaktierbarkeit des Akkumulatormoduls, indem ein mit seiner Bodenfläche auf einer Auflagefläche platziertes Akkumulatormodul genauso kontaktierbar ist, wie ein mit seiner Deckelfläche auf der Auflagefläche platziertes Akkumulatormodul (also ein "auf den Kopf gestelltes" Akkumulatormodul).

Gegenüber den aus dem Stand der Technik, wie er durch die eingangs genannten Dokumente belegt ist, bekannten Akkumulatormodulen, zeichnet sich die hier vorgeschlagene Neuerung durch die einfache und gleichzeitige mechanische Verbindbarkeit und elektrisch leitende Kontaktierbarkeit über die Anreihflächen der Akkumulatormodule aus. Bei der US 2005/0208375 A1 ist zum Beispiel eine mechanische Verbindbarkeit über die Anreihflächen der dortigen Module gegeben. Zur elektrisch leitenden Kontaktierung der angereihten Module ist das separate Anschließen zusätzlicher Leitungselemente (in der US 2005/0208375 als "tabs" bezeichnet) erforderlich.

Das elektrische und mechanische Kombinieren zweier Module erfordert also bei der US 2005/0208375 stets mehrere Arbeitsschritte. Ähnlich verhält es sich bei der US 2013/0011719 A1, wo die elektrisch leitende Verbindung zwischen aufeinander gestapelten Modulen mittels seitlicher Kontaktlaschen - also von den Anreihflächen räumlich getrennten Kontaktmitteln - erfolgen soll.

Bei den Modulen der WO 2015/042295 A1 ist mittels der Module selbst zwar eine elektrisch leitende Verbindung möglich. Eine mechanische Verbindung wird aber mittels eines jeweils mehrere Module umgreifenden äußeren Rahmens hergestellt. Das aus der DE 10 2013 008 641 A1 bekannte Modul ist zum Anschluss an eine Stromschiene oder dergleichen bestimmt und eine Verbindung (elektrisch oder mechanisch) mit anderen gleichartigen Modulen ist nicht vorgesehen.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie eine Auslegung der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Akkumulatormoduls nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Des Weiteren ist darauf hinzuweisen, dass die mit der Anmeldung eingereichten Patentansprüche Formulierungsvorschläge ohne Präjudiz für die Erzielung weitergehenden Patentschutzes sind. Da speziell die Merkmale der abhängigen Ansprüche im Hinblick auf den Stand der Technik am Prioritätstag eigene und unabhängige Erfindungen bilden können, behält die Anmelderin sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der jeweils in Bezug genommenen Ansprüche unabhängige Gestaltung aufweisen.

Bei einer speziellen Ausführungsform des Akkumulatormoduls ist ein die Bodenfläche, die Deckelfläche und die beiden Seitenflächen umfassendes Gehäuse des Akkumulatormoduls ein Abschnitt eines Strangprofils. Das Gehäuse ist damit ein einstückiges Gehäuse. Dies befördert die Stabilität des Akkumulatormoduls. Eine separate Montage der von dem Gehäuse einstückig umfassten Seitenflächen entfällt, sodass auch die Montage des Akkumulatormoduls vereinfacht ist.

Bei einer nochmals weiteren Ausführungsform des Akkumulatormoduls umfasst dieses ein zum Beispiel zum Stapeln des Akkumulatormoduls auf zumindest einem anderen Akkumulatormodul vorgesehenes Stapelprofil in der Bodenfläche und/oder der Deckelfläche. Damit sind mehrere Akkumulatormodule nicht nur (in einer geometrischen Richtung) anreihbar, sondern darüber hinaus auch (in einer weiteren geometrischen Richtung) kombinierbar. Mittels eines Stapelprofils kann das Akkumulatormodul auch auf oder an einer Aufstellfläche, zum Beispiel einem Regalboden, fixiert oder an einer vergleichbaren Fläche angehängt werden. Genauso kommt eine Fixierung an, auf, in oder unter einer Maschine, einem Maschinenteil, einem Schrank, einem Regal, einem Ständer oder dergleichen in Betracht.

Ein Akkumulatormodul der hier und im Folgenden beschriebenen Art fungiert einzeln als Energiespeichervorrichtung und elektrische Energiequelle, ist aber auch und vor allem mit weiteren Akkumulatormodulen kombinierbar, sodass sich ein ebenfalls als Energiespeichervorrichtung und elektrische Energiequelle fungierendes System mit einer Mehrzahl von Ackumulatormodulen ergibt. Die Erfindung ist auch ein solches System, das in der anschließenden Figurenbeschreibung aufgrund einer grundsätzlichen Platzierbarkeit in einem Schaltschrank oder dergleichen als Rack bezeichnet wird.

Ein solches System mit einer Mehrzahl von Akkumulatormodulen der hier und im Folgenden beschriebenen Art zeichnet sich dadurch aus, dass innerhalb des Systems die Akkumulatormodule mittels einzelner Modulverbinder elektrisch leitend verbindbar sind, wobei die einzelnen Modulverbinder aus einer begrenzten Menge verschiedener, vorkonfigurierter Modulverbinder stammen und wobei ein kürzester Modulverbinder und ein nächstlängerer Modulverbinder in einem festen Längenverhältnis, zum Beispiel einem Längenverhältnis von 1:2, 1:2,5, 1:3 usw., zueinander stehen. Das System umfasst eine Mehrzahl gleich langer kürzester Modulverbinder und eine Mehrzahl untereinander ebenfalls jeweils gleich langer nächstlängerer Modulverbinder. Die Länge der kürzesten Modulverbinder und die Länge der nächstlängeren Modulverbinder hängen vom Abstand der Akkumulatormodule untereinander in dem System ab. In dem System sind die davon umfassten Akkumulatormodule regelmäßig beabstandet, zum Beispiel mit einem ersten, innerhalb des Systems gleichen Abstand in vertikaler Richtung und einem zweiten, innerhalb des Systems ebenfalls gleichen Abstand in horizontaler Richtung. Aufgrund solcher regelmäßiger Abstände und der identischen Form und Geometrie aller von dem System umfassten Akkumulatormodule ist eine begrenzte Menge verschiedener (verschieden langer) Modulverbinder möglich. Aufgrund der identischen Form und Geometrie ergeben sich fixe und regelmäßige Abstände, insbesondere fixe minimale Abstände. Der kürzeste Modulverbinder ist zur Überbrückung des in dem System minimal möglichen Abstands vorgesehen. Die Möglichkeit der Begrenzung der Menge verschiedener Modulverbinder wird zudem dadurch befördert, wenn die Anschlüsse der Ackumulatormodule symmetrisch bezüglich einer mittig durch die beiden Anreihflächen verlaufenden Mittellängsachse des Akkumulatormoduls angeordnet sind.

Bei einer Ausführungsform eines solchen Systems fungieren als Modulverbinder starre, lösbar mit jeweils zwei Akkumulatormodulen verbindbare Modulverbinder, welche an ihren Enden optional lösbar mit den Modulverbinder verbindbare Kontaktelemente tragen, die elektrisch und mechanisch mit den Anschlüssen jeweils eines Akkumulatormoduls verbindbar sind. Dann sind nicht nur die Akkumulatormodule bei deren Aneinanderreihung in einem Strang nach Art eines Stecksystems elektrisch miteinander verbindbar, sondern dasselbe Stecksystem findet auch bei der Verbindung einzelner Stränge untereinander mittels zumindest eines Modulverbinders Anwendung.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. So sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Fig. 1: ein Akkumulatormodul,
- Fig. 2: eine Kombination mehrerer Akkumulatormodule,
- Fig. 3: eine weitere Ausführungsform eines Akkumulatormoduls,
- Fig. 4: eine nochmals weitere Ausführungsform eines Akkumulatormoduls,
- Fig. 5: unterschiedliche elektrische Grundformen eines Ackumulatormoduls,
- Fig. 6: die Grundformen gemäß Fig. 5 in einer schaltbaren Variante,
- Fig. 7: ein elektrisches Ersatzschaltbild mehrerer zusammengeschalteter Akkumulatormodule,
- Fig. 8: und
- Fig. 9: ein System (Rack) mit einer Vielzahl zusammengeschalteter Akkumulatormodule.

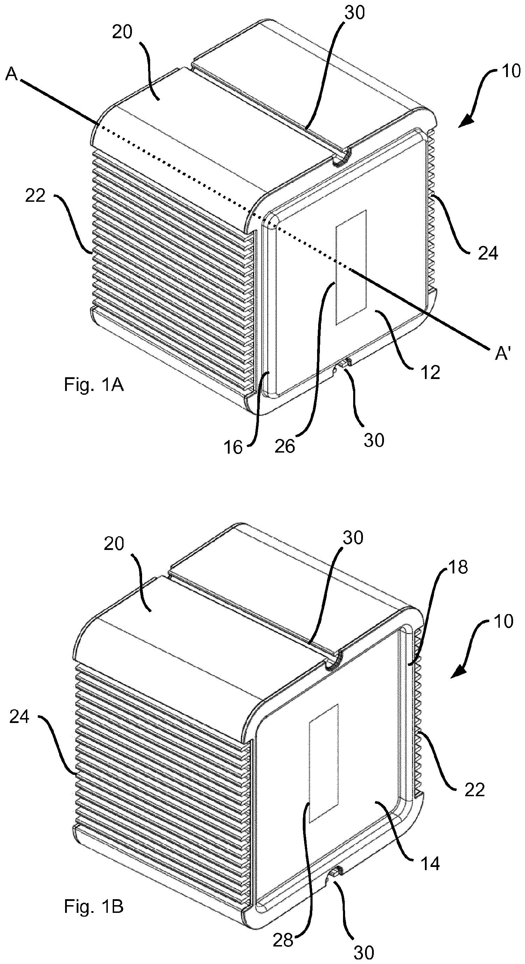

Die Darstellung in **Figur 1** (Figur 1A, Figur 1B) zeigt Akkumulatormodule 10 aus unterschiedlichen Ansichten. Die Akkumulatormodule 10 des Ausführungsbeispiels zeichnen sich durch eine würfelförmige Geometrie aus. Entsprechend wird ein Akkumulatormodul 10 im Folgenden mitunter auch kurz, aber ausdrücklich ohne Verzicht auf eine weitergehende Allgemeingültigkeit, als Würfel (andere Geometrien, insbesondere quaderförmige Geometrien sind jeweils mitzulesen) bezeichnet.

Das Akkumulatormodul 10 weist erkennbar sechs Seitenflächen auf, bei einem Würfel sechs gleich große oder zumindest im Wesentlichen gleich große Seitenflächen. Von diesen fungieren zwei gegenüberliegende Seitenflächen als Anschlussseiten / Anschlussflächen 12, 14. Die Anschlussflächen 12, 14 sind auch Anreihflächen. Jede Anschlussseite 12, 14 weist ein Anreih- / Anschlussprofil 16, 18 auf. Die Darstellung in Figur 1A zeigt das Akkumulatormodul 10 mit Blick auf eine frontseitige Anschlussseite 12 und die Darstellung in Figur 1B zeigt das Akkumulatormodul 10 mit Blick auf eine rückseitige Anschlussseite 14.

Von den restlichen vier Flächen fungieren zwei einander gegenüberliegende Flächen als Bodenfläche (in Figur 1A, 1B verdeckt) und als Deckelfläche 20. Die beiden dann noch verbleibenden Flächen bilden die Seitenflächen 22, 24. Diese Seitenflächen 22, 24 weisen optional Kühlrippen auf oder sind mit einer rippenförmigen oder einer sonstigen die Gesamtoberfläche zum Zwecke der Wärmeabgabe erhöhenden Oberflächenstruktur ausgebildet. Die genannten Flächen 12, 14, 20, 22, 24 schließen einen Hohlraum ein, in dem sich eine oder mehrere Ackuzellen befinden, zum Beispiel Akkuzellen in Form sogenannter Rundzellen und zum Beispiel in einer Anordnung, wie dies in der parallelen Anmeldung desselben Anmelders mit dem amtlichen Aktenzeichen PCT/EP2017/064979 und dem Titel "Akkumulatormodul mit optimierter Stromführung" und/oder in einer Anordnung, wie dies in der parallelen Anmeldung desselben Anmelders mit dem amtlichen Aktenzeichen PCT/EP2017/064982 und dem Titel "Akkumulatormodul mit optimierter Wärmeabfuhr" beschrieben ist. Beide Anmeldungen sollen mit diesem Hinweis vollumfänglich als in die hier vorgelegte Beschreibung einbezogen gelten.

Bei einer besonderen Ausführungsform ist ein die Bodenfläche, die Deckelfläche 20 und die beiden Seitenflächen 22, 24 umfassendes Gehäuse ein Abschnitt eines Strangprofils. Die genannten Flächen 20, 22, 24 sind dann einstückig miteinander verbunden und bei einem solchen Gehäuse wird dieses beidseitig durch die Anschlussseiten 12, 14 geschlossen.

Zumindest eine Anschlussseite 12, 14 eines Akkumulatormoduls 10 - optional jede Anschlussseite 12, 14 - weist einen Anschluss 26, 28 zur zumindest elektrisch leitenden Kontaktierung des jeweiligen Akkumulatormoduls 10 auf. Bei einer Ausführungsform mit nur einem Anschluss 26 in genau einer Anschlussseite 12 (der frontseitigen Anschlussseite 12) ist die rückwärtige Fläche keine Anschlussseite und der durch die Bodenfläche und die Deckelfläche 20 sowie die Seitenflächen 22, 24 begrenzte Hohlraum ist auf der der frontseitigen Anschlussseite 12 gegenüberliegenden Seite durch einen Blinddeckel verschlossen.

Als Anschluss 26, 28 kommt grundsätzlich jedes zumindest zweipolige Kontaktelement oder eine Kombination zumindest zweier jeweils zumindest einpoliger Kontaktelemente in Betracht. Deshalb sind in der Darstellung in Figur 1A und 1B die Anschlüsse 26, 28 auch nur stilisiert und ohne spezielle Details gezeigt. Die Anschlüsse 26, 28 sind in einer Art und Weise ausgeführt, dass mittels eines Anschlusses 26 eines Ackumulatormoduls 10 die Anschlüsse 28 eines weiteren Akkumulatormoduls 10 werkzeuglos kontaktierbar sind, zum Beispiel indem die Anschlüsse 26, 28 nach dem Stecker-Buchse-Prinzip formschlüssig zueinander passend ausgeführt sind. Wesentlich ist allerdings, dass die Anschlüsse 26, 28 symmetrisch bezüglich einer mittig durch die beiden Anschlussseiten 12, 14 verlaufenden Mittellängsachse A-A' (in Figur 1A gezeigt) angeordnet sind. Dies gewährleistet, dass mittels eines Anschlusses 26 eines ersten Akkumulatormoduls 10 ein Anschluss 28 eines weiteren Akkumulatormoduls 10 zumindest elektrisch und mechanisch kontaktierbar ist und umgekehrt. Diese Kontaktierbarkeit ist vor allem auch unabhängig davon gegeben, ob das Akkumulatormodul 10 auf der Bodenfläche steht oder ob das Akkumulatormodul 10 auf der (dann als Bodenfläche fungierenden) Deckelfläche 20 steht. Diese Kontaktierbarkeit erlaubt also bei Erhalt der Kontaktierbarkeit ein Drehen eines Akkumulatormoduls 10 um dessen Mittellängsachse A-A'.

Die durch das Zentrum beider Anschlussseiten 12, 14 verlaufende gedachte Linie, die Mittellängsachse A-A', wird im Folgenden auch als Anreihachse bezeichnet. Entlang dieser Anreihachse A-A' können mehrere Würfel (mehrere Akkumulatormodule 10) aneinander angereiht werden, sodass sich ein Strang von aneinander angereihten und durch Anreihung miteinander verbundenen Würfeln ergibt.

Zum Verbinden eines Würfels mit einem benachbarten Würfel über die Anreihflächen 12, 14 durch Anreihen ist optional einer werkzeuglose, lösbare Verbindbarkeit nach Art eines Stecksystems vorgesehen. Dazu ist zum Beispiel vorgesehen, dass eine der beiden Anreihflächen 14 gegenüber einer Hüllkontur des Würfels zumindest abschnittsweise zurückspringt (abgesenkt / eingesenkt ist), zum Beispiel in einer Art und Weise wie dies bei der Ausführungsform gemäß Figur 1 in der Darstellung in Figur 1B gezeigt ist, und dass die Anreihfläche 12 auf der gegenüberliegenden anderen Seite des Würfels in gleichem Maße abschnittsweise erhaben ist, zum Beispiel in einer Art und Weise wie dies bei der Ausführungsform gemäß Figur 1 in der Darstellung in Figur 1A gezeigt ist. Bei einer solchen Ausführungsform weist also jeder Würfel eine vorspringende ("male") Anreihfläche 12 und eine zurückspringende ("female") Anreihfläche 14 auf. Das resultierende Profil ist das Anschluss- / Anreihprofil 16, 18. Ein male-Anreihprofil 16 eines ersten Würfels ist werkzeuglos formschlüssig mit einem female-Anreihprofil 18 eines weiteren Würfels kombinierbar und umgekehrt. Durch eine solche Kombination entsteht eine Aneinanderreihung zweier Würfel sowie durch eventuelle Hinzufügung weiterer Würfel eine Aneinanderreihung einer entsprechenden Mehrzahl von Würfeln, also ein Würfelstrang mit zwei oder mehr Würfeln (oder ein Strang mit zwei oder mehr Akkumulatormodulen 10). Optional entspricht eine geometrische Form einer Randlinie der Anreihprofile 16, 18 eines Würfels dessen geometrischer Grundform, bei einer Würfelform ist also die Randlinie der Anreihprofile 16, 18 quadratisch.

Die formschlüssige Verbindung zweier Würfel über deren zueinander passende Anreihprofile 16, 18 kann eine lösbare mechanische Verbindung der beiden so aneinander angereihten Würfel bewirken, zum Beispiel mittels in die Anreihprofile 16, 18 integrierter Rastelemente, Dichtungen oder dergleichen. Alternativ oder zusätzlich kann eine lösbare mechanische Verbindung jeweils zweier aneinander angereihter Würfel auch mittels zumindest eines Kontaktelements jedes Anschlusses 26, 28 der Anschlussflächen 12, 14 hergestellt werden.

Bei einer Aneinanderreihung mehrerer Würfel / Akkumulatormodule 10 ist selbstverständlich ein polrichtiger Anschluss notwendig. Dafür ist zumindest einer der Pole (Minuspol und/oder Pluspol) der Anschlüsse 26, 28 kodiert, so dass nur eine zulässige Verbindung der Pole eines Akkumulatormoduls 10 mit den Polen des in dem Stang unmittelbar nachfolgenden Ackumulatormoduls 10 möglich ist. Zurückkommend auf die oben erwähnte Drehbarkeit jedes Akkumulatormoduls 10 um dessen Mittellängsachse A-A' bedeutet dies, dass an ein erstes Akkumulatormodul 10 weitere Akkumulatormodule 10 nur in derselben Rotationslage (alle Deckelflächen 20 weisen in dieselbe Richtung) anschließbar sind. Neben einer solchen Kodierung der Anschlüsse 26, 28 sind die Anschlüsse 26, 28 berührungssicher ausgeführt und die Pole der Anschlüsse 26, 28 weisen zumindest einen Abstand gemäß Industriestandard, also zum Beispiel einen Abstand von 40 mm, 60 mm, 80 mm etc., auf. Auch das durch die Bodenfläche, die Deckelfläche 20 und die Seitenflächen 22, 24 gebildete Gehäuse ist zusammen mit den das Gehäuse front- und rückseitig abschließenden Flächen insgesamt berührungssicher ausgeführt.

Die elektrische Verbindung jeweils zweier Würfel / Akkumulatormodule 10 miteinander erfolgt vollständig werkzeuglos und durch "Zusammenstecken" von deren Anschlüssen 26, 28, nämlich durch Zusammenstecken von als Leistungskontakten fungierenden Kontaktelementen der Anschlüsse 26, 28. Optional umfassen diese Anschlüsse 26, 28 nicht nur jeweils zumindest einen Leistungskontakt für die beiden elektrischen Pole, sondern auch zumindest ein als Kommunikationskontakt fungierendes Kontaktelement für eine Übermittlung von Daten und/oder Steuersignalen. Eine solche Übermittlung erfolgt zum Beispiel von einem Würfel / Akkumulatormodul 10 an zumindest einen weiteren Würfel / zumindest ein weiteres Akkumulatormodul 10, von einem Würfel / Akkumulatormodul 10 an eine übergeordnete Einheit und/oder von einer solchen übergeordneten Einheit an einen Würfel / ein Akkumulatormodul 10. Die elektrisch leitende Kontaktierung der Akkumulatormodule 10 mittels der Anschlüsse 26, 28 umfasst dann eine elektrisch leitende Kontaktierung der von den Anschlüssen 26, 28 umfassten Leistungskontakte und Kommunikationskontakte.

Als "zumindest elektrisch leitende Verbindung" oder "zumindest elektrische Verbindung" zweier Akkumulatormodule 10 wird eine elektrisch leitende Verbindung der Leistungskontakte verstanden, also zum Beispiel eine Verbindung von Anschlüssen 26, 28, welche nur oder zumindest Leistungskontakte umfassen. Als "elektrisch leitende Verbindung" oder "elektrische Verbindung" zweier Akkumulatormodule 10 wird eine Verbindung von Anschlüssen 26, 28 verstanden, welche entweder nur Leistungskontakte oder neben Leistungskontakten auch Kommunikationskontakte umfassen.

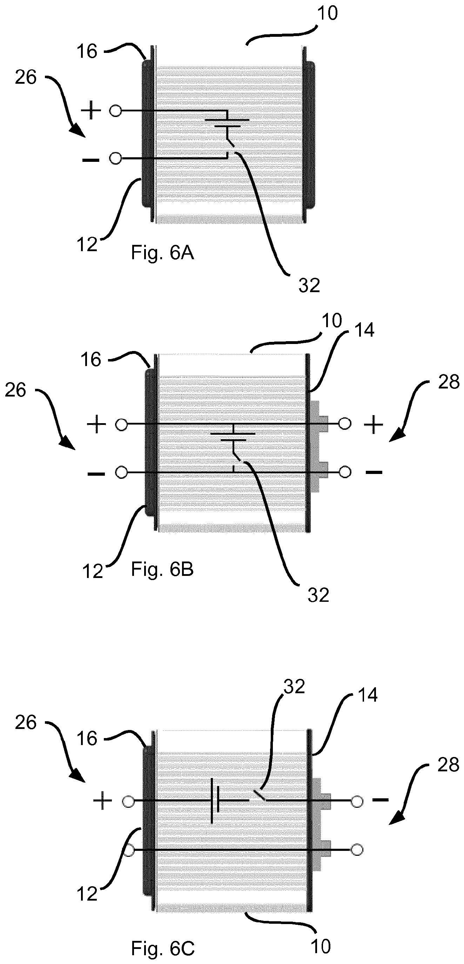

Eine kommunikative Verbindung ist zum Beispiel in grundsätzlich an sich bekannter Art und Weise in Form eines CAN-Busses oder dergleichen ausgeführt und jeder Würfel / jedes Akkumulatormodul 10 ist ein einzeln ansprechbarer Kommunikationsteilnehmer in einem resultierenden Netzwerk, zum Beispiel einem Netzwerk, in dem alle untereinander kommunikativ verbundenen Würfel / Akkumulatormodule 10 gleichranging sind oder die übergeordnete Einheit als Master und jedes Akkumulatormodul 10 als Slave fungiert. Mittels einer solchen kommunikativen Verbindung kann ein Akkumulatormodul 10 automatisch aktiviert oder deaktiviert werden (zum Beispiel durch Ansteuerung eines optionalen Schaltelements gemäß Figur 6). Optional kann eine Kommunikation mit einem von jedem Akkumulatormodul 10 optional umfassten, grundsätzlich an sich bekannten Batteriemanagementsystem (BMS) erfolgen, sodass zum Beispiel die von einem solchen Batteriemanagementsystem gelieferten Daten für eine zentrale Auswertung und/oder eine zentrale Steuerung mehrerer Akkumulatormodule 10 verwendbar sind und/oder die mittels eines solchen Batteriemanagementsystems gegebenen, ebenfalls grundsätzlich an sich bekannten Einflussmöglichkeiten auf die von einem Akkumulatormodul 10 umfassten Akkuzellen nutzbar sind (Laderegelung, Aktivierung/Deaktivierung einzelner Akkuzellen etc.).

In der Bodenfläche und in der Deckelfläche 20 ist optional jeweils mittig und parallel zu der o.g. Mittellängsachse A-A' ein Profil gebildet. Dieses Profil erlaubt eine weitere lösbare mechanische Verbindung eines Würfels mit einem weiteren Würfel, nämlich ein Stapeln mehrerer Würfel und eine lösbare Verbindung jeweils zweier Würfel im gestapelten Zustand. Dabei bildet jeweils eine Deckelfläche 20 eines Würfels eine Basis zum Aufsetzen einer Bodenfläche eines benachbarten Würfels. Zum Verbinden zweier aufeinander gestapelter Würfel mittels der genannten Profile wird in diese ein Verbinder eingeschoben. Im Folgenden werden diese Profile zur Unterscheidung von den Anreihprofilen 16, 18 als Stapelprofile 30 bezeichnet.

Zwei oder mehr Würfel können mittels der Stapelprofile 30 in einer Anordnung übereinander (vertikal) lösbar miteinander verbunden werden. Diese vertikale Verbindbarkeit ist auch mit der bereits beschriebenen Anreihbarkeit, also einer Verbindbarkeit in horizontaler Richtung, kombinierbar. Demgemäß lässt sich ein Würfelstrang auf einem anderen Würfelstrang platzieren und durch Einschieben eines Verbinders in das Stapelprofil 30 lassen sich die beiden übereinander angeordneten Stränge (oder jeweils zwei übereinander angeordnete Stränge) lösbar miteinander verbinden.

Mittels des Stapelprofils 30 ist ein Würfel auch lösbar an einer Tragkonstruktion fixierbar (stehend oder hängend) oder auch mit einer vertikal ausgerichteten Boden- und Deckelfläche 20 an einer Tragkonstruktion fixierbar. Als Tragkonstruktion kommen Schaltschränke oder dergleichen, aber auch Maschinen oder Maschinenteile, Fahrzeuge oder Fahrzeugteile usw. in Betracht.

Ein Würfel der vorstehend beschriebenen Art - oder allgemein ein Akkumulatormodul 10 mit einer allgemeineren Geometrie, insbesondere einer quaderförmigen Geometrie - ist die Basis für ein modular erweiterbares System zum Vorhalten und Speichern elektrischer Energie. Ein die Bodenfläche, die Deckelfläche 20 und die beiden Seitenflächen 22, 24 umfassendes Gehäuse ist optional ein Abschnitt eines Strangprofils.

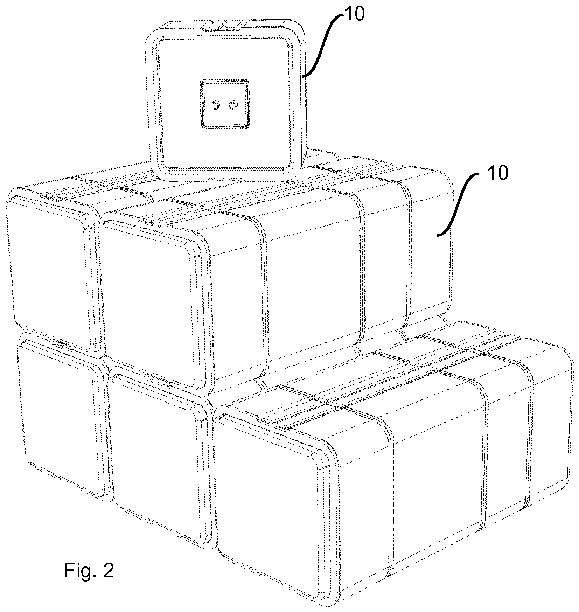

Die Darstellung in **Figur 2** zeigt einen Verbund einer Mehrzahl von Würfeln (Akkumulatormodulen 10). In zwei Lagen befinden sich jeweils eine Mehrzahl von Würfelsträngen. Jeder Würfelstrang ist eine Aneinanderreihung mehrerer Würfel. Oben auf der zweiten Lage befindet sich ein einzelner Würfel. Es ist darauf hinzuweisen, dass die gezeigte Anordnung eine lediglich exemplarische Anordnung ist und die Würfel grundsätzlich beliebig kombinierbar sind.

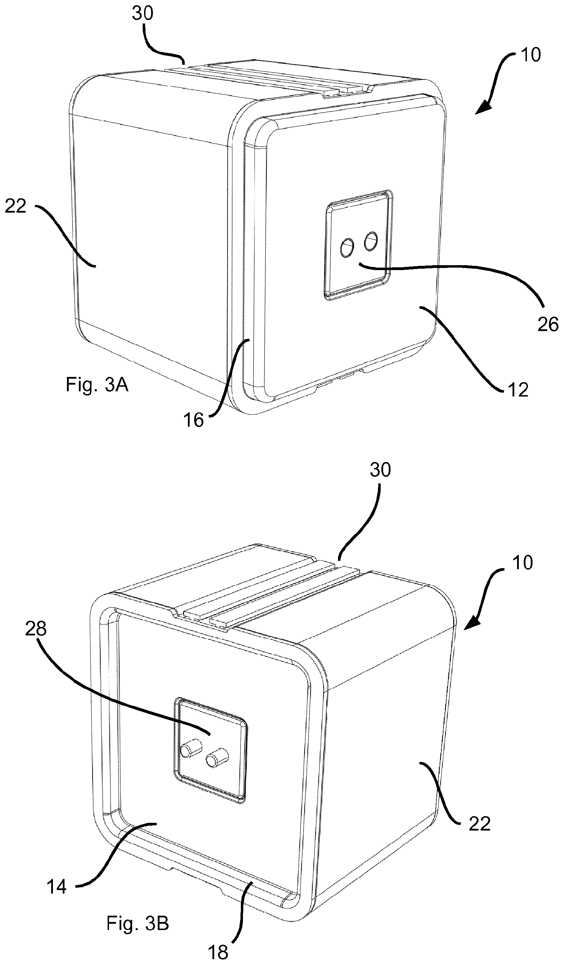

Die Darstellung in **Figur 3** (Figur 3A, Figur 3B) zeigt einen einzelnen Würfel mit Blick auf eine von dessen Anschlussflächen 12, 14. Die Darstellung in **Figur 3A** zeigt das dortige (zurückspringende) Anschlussprofil 16. Im Zentrum des Anschlussprofils 16 befindet sich als Beispiel für einen Anschluss 26 des Akkumulatormoduls 10 ein Kontaktelement mit zwei Steckern. Die Darstellung in **Figur 3B** zeigt das (erhabene) Anschlussprofil 18 auf der gegenüberliegenden Anschlussfläche 14. Dort befindet sich im Zentrum ein buchsenförmiges Kontaktelement, in welches die Stecker eines anderen Würfels eingreifen können.

Die Anschlussprofile 16, 18 sind formschlüssig miteinander kombinierbar. Die Anschlüsse 26, 28 sind formschlüssig miteinander kombinierbar. Mit einem Würfel gemäß Figur 3A mit der dort gezeigten Anschlussfläche 12 ist folglich ein weiterer Würfel mit der in Figur 3B gezeigten Anschlussfläche 14 kombinierbar. Die Anschlüsse 26, 28 sind im Zentrum der Anschlussflächen 12, 14 angeordnet und symmetrisch (punktsymmetrisch zur Mittellängsachse A-A') ausgeführt. Es ergibt sich eine lösbare mechanische Kombination aufgrund der Anschlussprofile 16, 18 und eine lösbare elektrische Kombination aufgrund der Anschlüsse 26, 28. Dies, nämlich die Kombinierbarkeit aufgrund der Anschlussprofile 16, 18 und/oder der Anschlüsse 26, 28, gilt unabhängig von der konkret gezeigten Ausführungsform und ist das zentrale Merkmal eines Akkumulatormoduls 10 gemäß dem hier vorgestellten Ansatz.

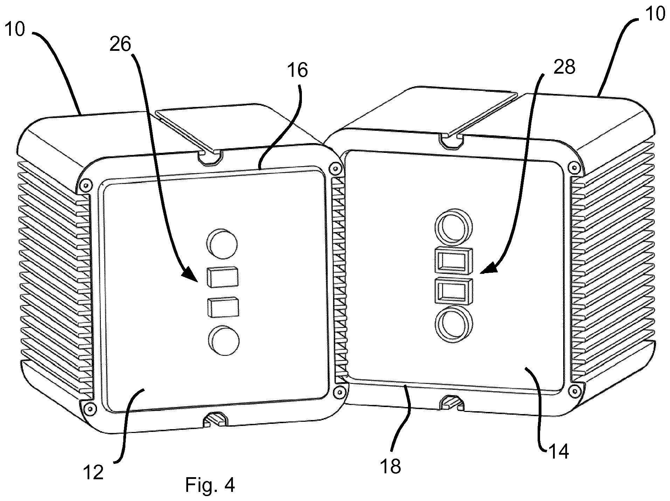

Die Darstellung in **Figur 4** zeigt zwei Würfel (Akkumulatormodule 10), die so nebeneinander platziert sind, dass deren unterschiedliche Anschlussflächen 12, 14 erkennbar sind. Im Vergleich zu der Ausführungsform gemäß Figur 2 und Figur 3 weisen diese - nur zur Veranschaulichung, dass verschiedenste Anschlüsse 26, 28 möglich sind - andere Anschlüsse 26, 28 auf. Auch diese Anschlüsse 26, 28 sind im Zentrum der Anschlussflächen 12, 14 angeordnet und symmetrisch (punktsymmetrisch zur Mittellängsachse A-A'). Bei den gezeigten Anschlüssen 26, 28 fungieren zum Beispiel die rund dargestellten Kontaktelemente als Leistungskontakte und die rechteckig dargestellten Kontaktelemente als Kommunikationskontakte. Die Kontaktelemente sind ersichtlich jeweils nach Art einer Stecker-Buchsen-Kombination formschlüssig miteinander kombinierbar, nämlich formschlüssig, werkzeuglos und lösbar miteinander kombinierbar. Die erwähnte, grundsätzlich optionale Kodierung der Anschlüsse 26, 28 ist in der Darstellung in Figur 4 im Interesse der Übersichtlichkeit nicht gezeigt und kann zum Beispiel als nach innen weisende "Nase" in einem oder jedem hohlzylindrisch dargestellten Kontaktelement und einer entsprechenden Ausnehmung in dem oder jedem zylindrisch dargestellten Kontaktelement ausgeführt sein.

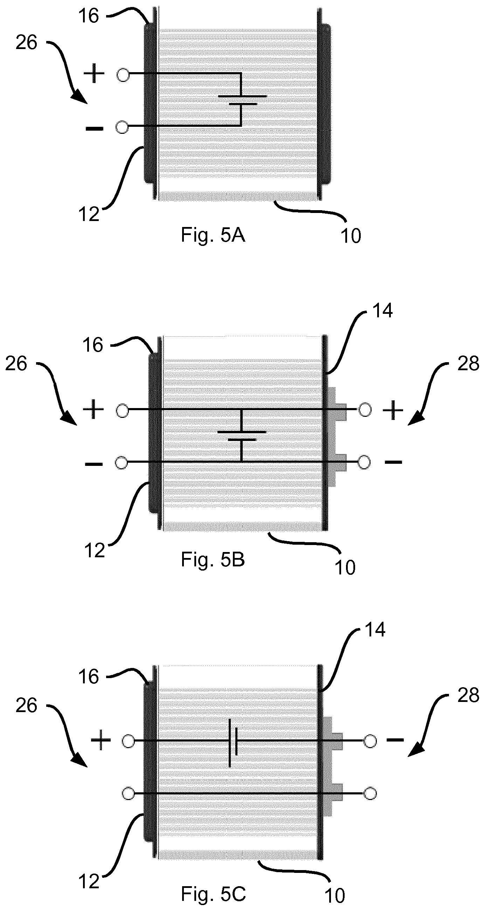

Die Darstellung in Figur 5 (Figuren 5A, 5B, 5C) zeigt schematisch vereinfacht die Funktion des Akkumulatormoduls 10 als Energiespeichervorrichtung und als elektrische Energiequelle. Eine von einem Akkumulatormodul 10 umfasste Akkuzelle sowie bei einer Mehrzahl von Akkuzellen die Gesamtheit der von einem Akkumulatormodul 10 umfassten Akkuzellen ist dabei durch das Schaltzeichen für eine galvanische Zelle gezeigt.

Ein Akkumulatormodul 10 gemäß Figur 5A kann einzeln als Strom- oder Spannungsquelle verwendet werden (im Folgenden wird - soweit nötig - nur noch auf die Eigenschaft des Akkumulatormoduls 10 als Spannungsquelle eingegangen; eine Funktion als Strom- oder allgemein als Energiequelle ist selbstverständlich jeweils mitzulesen). Aufgrund der zuvor beschriebenen Anreihfähigkeit kann ein Akkumulatormodul 10 gemäß Figur 5A zum Beispiel mit einem Akkumulatormodul 10 gemäß Figur 5B oder mit einem Akkumulatormodul 10 gemäß Figur 5C kombiniert werden. Die Akkumulatormodule 10 werden dabei strangartig hintereinander angeordnet, derart, dass eine rückwärtige Anschlussfläche 14 eines Akkumulatormoduls 10 einer frontseitigen Anschlussfläche 12 eines in dem resultierenden Strang nachfolgenden Akkumulatormoduls 10 zugewandt ist. In einer solchen Kombination bildet ein (nicht gezeigtes) Akkumulatormodul 10 mit nur einer Anschlussfläche 12, 14 den Abschluss eines resultierenden Strangs. Die Anzahl in dem Strang vorangehender Akkumulatormodule 10 entweder gemäß Figur 5B oder alternativ gemäß Figur 5C ist grundsätzlich beliebig. Bei einer Zusammenschaltung mehrerer Akkumulatormodule 10 gemäß Figur 5B mit einem abschließenden Akkumulatormodul 10 gemäß Figur 5A ergibt sich eine Parallelschaltung mit dem Ergebnis eines am Eingang des Strangs der miteinander verbundenen Akkumulatormodule 10 abgreifbaren Stroms in Höhe der Summe der von den einzelnen Akkumulatormodulen 10 ausgebbaren Ströme. Bei einer Zusammenschaltung mehrerer Akkumulatormodule 10 gemäß Figur 5C mit einem abschließenden Akkumulatormodul 10 gemäß Figur 5A ergibt sich eine Serienschaltung mit dem Ergebnis einer am Eingang des Strangs der miteinander verbundenen Akkumulatormodule 10 abgreifbaren Spannung in Höhe der Summe der Einzelspannungen jedes einzelnen Akkumulatormoduls 10.

Die Darstellung in **Figur 6** (Figuren 6A, 6B, 6C) zeigt schaltbare Varianten der Akkumulatormodule 10 gemäß Figur 5A, 5B bzw. 5C. Bei einer schaltbaren Variante umfasst das jeweilige Akkumulatormodul 10 ein Schaltelement 32, insbesondere ein elektrisch ansteuerbares Schaltelement 32, zum Beispiel ein Schaltelement 32 in Form eines Relais. Mittels eines solchen Schaltelements 32 kann Akkumulatormodul 10 (die oder jede davon umfasste Akkuzelle) in einem das Akkumulatormodul 10 umfassenden Stromkreis aktiviert oder deaktiviert werden. Bei einer Mehrzahl von in einem Strang zusammengefassten und zusammengeschalteten Akkumulatormodulen 10 kann jedes einzelne Akkumulatormodul 10 aktiviert oder deaktiviert werden.

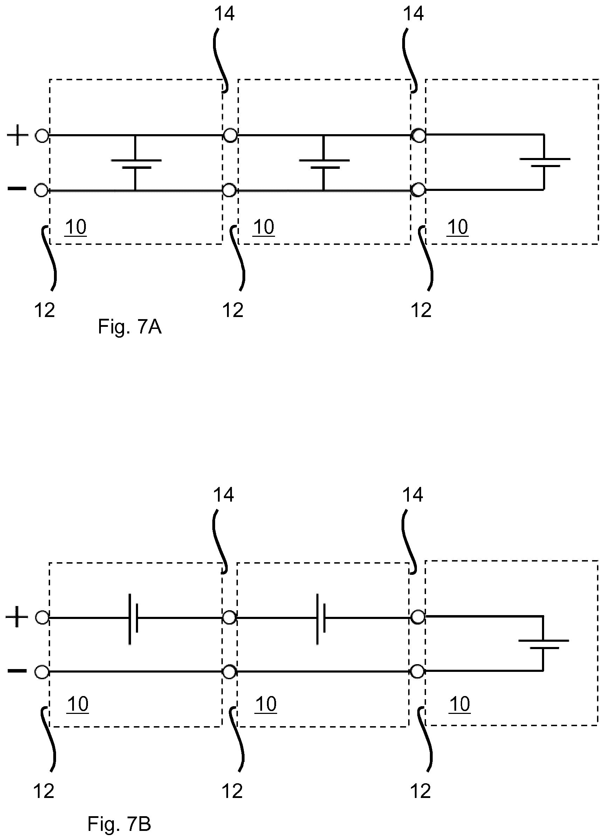

Die Darstellung in **Figur 7** (Figuren 7A, 7B) zeigt exemplarisch einzelne Verschaltungen von mehreren Akkumulatormodulen 10. Die Darstellung in Figur 7A zeigt eine Parallelschaltung mehrerer Akkumulatormodule 10, nämlich eine Parallelschaltung zweier Akkumulatormodule 10 gemäß Figur 5B und eines abschließenden Akkumulatormoduls 10 gemäß Figur 5A. Die Darstellung in Figur 7B zeigt eine Serienschaltung mehrerer Ackumulatormodule 10, nämlich eine Serienschaltung zweier Akkumulatormodule 10 gemäß Figur 5C und eines abschließenden Ackumulatormoduls 10 gemäß Figur 5A. Anstelle der gezeigten nicht schaltbaren Akkumulatormodule 10 sind genauso schaltbaren Akkumulatormodule 10 gemäß Figur 6 möglich. Bei der Zusammenschaltung gemäß Figur 7A (Parallelschaltung) ist am Eingang des resultierenden Strangs das Dreifache des von jedem einzelnen Akkumulatormodul 10 lieferbaren Maximalstroms abgreifbar. Bei der Zusammenschaltung gemäß Figur 7B (Serienschaltung) ist am Eingang des resultierenden Strangs die dreifache Nennspannung jedes einzelnen Akkumulatormoduls 10 abgreifbar. Bei mehr als drei Akkumulatormodulen 10 in einer Zusammenschaltung in Form einer Parallelschaltung oder einer Serienschaltung gilt die multiplikative Erhöhung der abgreifbaren Spannung bzw. des abgreifbaren Stroms entsprechend (vierfache Spannung bzw. vierfacher Strom bei vier Akkumulatormodulen 10; fünffache Spannung bzw. fünffacher Strom bei fünf Akkumulatormodulen 10 usw.).

Die Akkumulatormodule 10 gemäß Figur 5 oder gemäß Figur 6 stellen kombinierbare Einzelmodule dar, die in Abhängigkeit von einem jeweils gegebenen Energiebedarf passend und flexibel kombinierbar sind. Bei einer Parallelschaltung kann der resultierende Strang grundsätzlich beliebig viele Module gemäß Figur 5B / Figur 6B umfassen und ein Abschluss des jeweiligen Strangs erfolgt mittels eines Moduls gemäß Figur 5A. Bei einer Serienschaltung gilt dies entsprechend. Ein solcher Strang kann grundsätzlich beliebig viele Module gemäß Figur 5C / Figur 6C umfassen und ein Abschluss des jeweiligen Strangs erfolgt mittels eines Moduls gemäß Figur 5A.

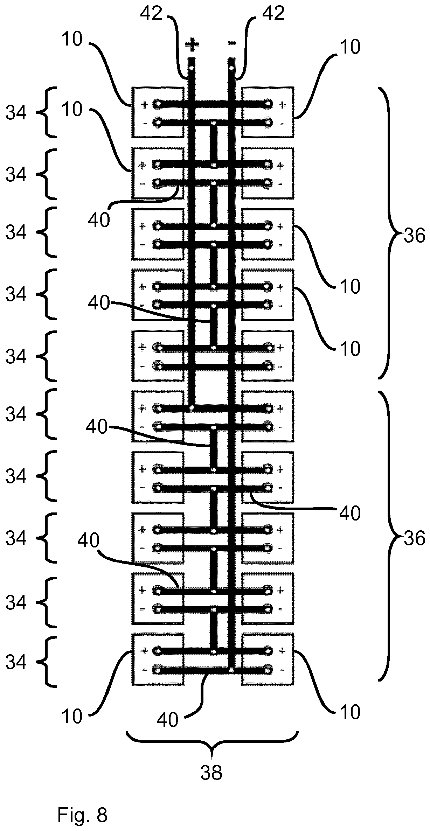

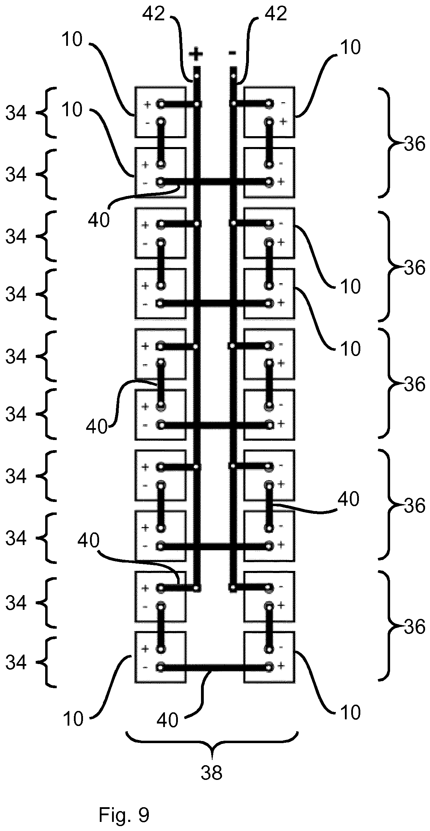

Die Darstellungen in Figur 8 und Figur 9 veranschaulichen die resultierende Flexibilität bei der Zusammenschaltung einer Vielzahl von Akkumulatormodulen 10. Die Darstellungen in Figur 8 und Figur 9 zeigen schematisch vereinfacht eine Draufsicht auf mehrere nebeneinander und übereinander angeordnete, im Folgenden kurz als Stränge bezeichnete Akkumulatormodulstränge. Von jedem Strang ist nur das anschlussseitige Akkumulatormodul 10 sichtbar. Einzelne dieser Akkumulatormodule 10 sind in den Darstellungen mit der entsprechenden Bezugsziffer bezeichnet. Jeder Strang kann eine Vielzahl von Akkumulatormodule 10 umfassen. Sinnvollerweise umfassen alle gemäß Figur 8 oder Figur 9 oder einer ähnlichen Konfiguration zusammengefasste Stränge jeweils dieselbe Anzahl von Akkumulatormodulen 10.

Erkennbar umfasst die Zusammenschaltung in mehreren Ebenen 34 jeweils zwei zusammengeschaltete Stränge. Jeweils zwei oder mehr Ebenen 34 lassen sich zu einem Ebenenverbund 36 zusammenfassen. Mehrere Ebenenverbunde 36 lassen sich ebenfalls zusammenfassen. Diese Zusammenfassung wird als Rack 38 bezeichnet und die Gesamtheit der davon umfassten Akkumulatormodule 10 lässt sich zum Beispiel in oder an einem regalartigen Gestell mit einer Mehrzahl von übereinander angeordneten Böden platzieren, insbesondere einem sogenannten Schaltschrank mit solchen Böden oder entsprechenden Auflageflächen, wobei die Böden als Auflagefläche für die Akkumulatormodule 10 fungieren und/oder die Akkumulatormodule 10 an solchen Böden angehängt sind oder an ein solches Anhängen erlaubenden Konstruktionselementen angehängt sind.

Die Verbindung erfolgt mittels starrer, steckbarer Modulverbinder 40, von denen in den Darstellungen in Figur 8 und Figur 9 nur einzelne bezeichnet sind. Bei den Modulverbindern 40 handelt es sich um starre Leiterabschnitte, welche an ihren Enden Kontaktelemente (nicht gezeigt) tragen, die - insbesondere nach Art einer Stecker-Buchse-Verbindung - zu den Anschlüssen 26, 28 der Akkumulatormodule 10 passen. Die Modulverbinder 40 sind also jeweils einseitig mit einem Anschluss 26, 28 eines Akkumulatormoduls 10 genauso verbindbar wie jeder Anschluss 26, 28 eines anderen Akkumulatormoduls 10 mit dem betreffenden Anschluss 26, 28 verbindbar ist. Elektrisch leitende Verbindungsstellen mit einem der Anschlüsse 26, 28 eines Akkumulatormoduls 10 oder mit einem weiteren Modulverbinder 40 oder einer Stromschiene 42 sind in Figur 8 und Figur 9 in Form eines weißen Punkts in der Fläche des Modulverbinders 40 bzw. der Stromschiene 42 gezeigt. An Kreuzungsstellen zweier Modulverbinder 40 oder eines Modulverbinders 40 und einer Stromschiene 42 ohne einen solchen weißen Punkt besteht keine elektrisch leitende Verbindung, zum Beispiel weil die betreffenden Modulverbinder 40 bzw. Stromschienen 42 mit Abstand voneinander in unterschiedlichen (räumlichen) Ebenen liegen.

Ein mit einem ersten Anschluss 26 eines Akkumulatormoduls 10 verbindbares Kontaktelement am Ende eines Modulverbinders 40 entspricht bevorzugt einem zweiten Anschluss 28, wie er sich ansonsten an einem weiteren Akkumulatormodul 10 befindet. Ebenso entspricht ein mit einem zweiten Anschluss 28 eines Akkumulatormoduls 10 verbindbares Kontaktelement am Ende eines Modulverbinders 40 bevorzugt einem ersten Anschluss 26, wie er sich ansonsten an einem weiteren Akkumulatormodul 10 befindet. Jedenfalls weisen die Kontaktelemente der Modulverbinder 40 zumindest Leistungskontakte zur Kontaktierung der Leistungskontakte der Anschlüsse 26, 28 und optional Leistungskontakte zur Kontaktierung der Leistungskontakte der Anschlüsse 26, 28 sowie Kommunikationskontakte zur Kontaktierung der Kommunikationskontakte der Anschlüsse 26, 28 auf. Die Verbindung eines Kontaktelements eines Modulverbinders 40 mit einem Anschluss 26, 28 erfolgt optional genauso werkzeuglos, wie die Verbindung zweier Akkumulatormodule 10 über deren Anschlüsse 26, 28 werkzeuglos erfolgt. Auch diese werkzeuglose Verbindung eines Modulverbinders 40 mit einem Akkumulatormodul 10 ist werkzeuglos lösbar.

Bei den starren Leiterabschnitten, welche die Basis der Modulverbinder 40 bilden, handelt es sich zum Beispiel um Abschnitte einer Kupferschiene mit rechteckigem Querschnitt, also Abschnitte einer Kupferschiene, die ansonsten auch als Stromschiene in Betracht kommt. Andere Leitermaterialien und andere Profilformen sind grundsätzlich ebenso möglich.

Die Modulverbinder 40 eines Racks 38 sind optional in fixen Längenverhältnissen vorgesehen. Wenn die Länge des kürzesten Modulverbinders 40 als Basislänge aufgefasst wird, hat der nächstlängere Modulverbinder 40 eine Länge, die dem x-fachen der Basislänge entspricht. Ein ggf. notwendiger wiederum nochmals längerer Modulverbinder 40 hat eine Länge, die dem y-fachen der Basislänge entspricht usw., wobei x und y natürliche oder rationale Zahlen sind. Beim in Figur 9 gezeigten Beispiel haben die Modulverbinder 40 mit der im Vergleich zur Basislänge nächstlängeren Länge zum Beispiel eine Länge von etwa dem 2,5-fachen der Basislänge.

Zur abschließenden Kontaktierung der Modulverbinder 40 sind entlang des Racks 38 verlaufende Stromschienen 42 vorgesehen. Dies erlaubt in grundsätzlich beliebigen Konfigurationen eine optional werkzeuglose Verbindung aller Modulstränge miteinander, indem die Modulverbinder 40 oder die Stromschienen 42 mit den Anschlüssen 26, 28 des jeweils frontseitigen Akkumulatormoduls 10 eines Modulstrangs verbunden werden, insbesondere auf diese Anschlüsse 26, 28 gesteckt werden.

Die in Figur 8 gezeigte Verbindung der von dem Rack 38 umfassten Akkumulatormodule 10 ist eine 2p (5s (2p (...)))-Verbindung. Diese Schreibweise ist wie folgt zu lesen:
2-fach parallele Schaltung von zwei Ebenenverbunden 36 mit je 5 seriell geschalteten Ebenen 34 mit je 2 parallel geschalteten Modulsträngen mit je ... seriell oder parallel geschalteten Akkumulatormodulen 10 in jedem Modulstrang.
Die Anzahl der Akkumulatormodule 10 in jedem Modulstrang ist dabei grundsätzlich beliebig und jeder Strang kann ein Akkumulatormodul 10, zwei Akkumulatormodule 10, drei Akkumulatormodule 10 usw. umfassen. Dies ist durch das Platzhaltersymbol "... " ausgedrückt.

Die in Figur 9 gezeigte Verbindung der von dem Rack 38 umfassten Akkumulatormodule 10 ist eine 5p (2s (2s (...)))-Verbindung. Diese Schreibweise ist wie folgt zu lesen:
5-fach parallele Schaltung von fünf Ebenenverbunden 36 mit je 2 seriell geschalteten Ebenen 34 mit je 2 seriell geschalteten Modulsträngen mit je ... seriell oder parallel geschalteten Akkumulatormodulen 10 in jedem Modulstrang. Auch hier ist die Anzahl der Ackumulatormodule 10 grundsätzlich beliebig (Schreibweise: "..."). Bei genau drei seriell geschalteten Akkumulatormodulen 10 in jedem Strang und einer Nennspannung U_{Modul} eines einzelnen Akkumulatormoduls 10 von 50 V ergibt sich eine an dem Rack 38 gemäß Figur 9 abgreifbare Spannung U_{Rack} als U_{Rack} = (2×2×3) × U_{Modul} = (2×2×3) ×50 V = 600 V.

Die in den Figuren 8 und 9 gezeigte Zusammenschaltbarkeit von Akkumulatormodulen 10 zu Ebenen 34, Ebenenverbunden 36 und einem resultierenden Rack 38 sind ausdrücklich nur Beispiele und zusätzlich zu den gezeigten Möglichkeiten ist eine beinahe unüberschaubare Vielzahl weiterer Verschaltungsmöglichkeiten denkbar. Selbstverständlich kann ein Rack 38 auch mehr oder weniger als die in den Figuren gezeigten zehn Ebenen 34 umfassen und selbstverständlich sind mehrere Racks 38 ebenfalls zusammenfassbar, um zu einer noch höheren Spannung, einem noch höheren Maximalstrom und/oder einer noch höheren elektrischen Leistung zu kommen.

Der Benutzer eines oder mehrerer Racks 38 kann das oder jedes Rack 38 individuell konfigurieren und erhält so eine grundsätzlich mobile, vom elektrischen Versorgungsnetz unabhängige Energiespeichervorrichtung, die in Bezug auf Spannung, Maximalstrom und Leistung auf die jeweiligen Bedürfnisse abgestellt ist. Die zugrundeliegende flexible Verbindbarkeit der Akkumulatormodule 10 oder der in den einzelnen Strängen frontseitigen Akkumulatormodule 10 mittels der Modulverbinder 40 ergibt sich dabei vor allem auch aufgrund der symmetrischen Anordnung der Anschlüsse 26, 28 in den Anschlussflächen 12, 14 der Akkumulatormodule 10. Wie oben erwähnt sind die Anschlüsse 26, 28 mittig in den Anschlussflächen 12, 14 platziert und punktsymmetrisch zu der Mittellängsachse A-A'. Dies erlaubt die unterschiedliche Platzierung der Akkumulatormodule 10 (oder ganzer Modulstränge), wie sie in Figur 8 und Figur 9 gezeigt ist.

In der Darstellung in Figur 8 sind alle Akkumulatormodule 10 / Modulstränge gleich ausgerichtet. Der Minuspol ist immer "unten". Der Pluspol immer "oben". In der Darstellung in Figur 9 sind die Akkumulatormodule 10 / Modulstränge unterschiedlich ausgerichtet. Auf der linken Seite des Racks 38 sind die Minuspole "unten" und die Pluspole "oben". Auf der rechten Seite des Racks sind dagegen die Minuspole "oben" und die Pluspole "unten". Diese "Drehbarkeit" der Akkumulatormodule 10 / Modulstränge bei Erhalt der Verbindbarkeit mit Modulverbindern 40 mit fixen Längen ist nur aufgrund der zentralen und symmetrischen Anordnung der Anschlüsse 26, 28 möglich. Die Schreibweise der Richtungsangaben "unten" und "oben" mit Anführungszeichen soll darauf hinweisen, dass hier Bezug auf die bildliche Darstellung in den Figuren genommen wird und bei einem nicht vertikal orientierten Rack 38 die Richtungsangaben sinngemäß durch andere Richtungsangaben zu ersetzen sind.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Die Erfindung ist ein Akkumulatormodul 10 mit einer quaderförmigen Außenkontur mit sechs Flächen, von denen zwei einander gegenüberliegende Flächen als front- und rückseitige Anschluss- und/oder Anreihflächen 12, 14, zwei weitere einander gegenüberliegende Flächen als Bodenfläche und Deckelfläche 20 und die restlichen Flächen als Seitenflächen 22, 24 fungieren, wobei ein Akkumulatormodul 10 über jeweils eine der Anschluss- und/oder Anreihflächen 12, 14 mit einem weiteren Akkumulatormodul 10 und einer von dessen als Anschluss- und/oder Anreihflächen 12, 14 kombinierbar ist.

### Bezugszeichenliste

- 10: Akkumulatormodul
- 12: (frontseitige) Anschlussseite / Anschlussfläche
- 14: (rückseitige) Anschlussseite / Anschlussfläche
- 16: Anreih- / Anschlussprofil
- 18: Anreih- / Anschlussprofil
- 20: Deckelfläche
- 22: Seitenfläche
- 24: Seitenfläche
- 26: Anschluss
- 28: Anschluss
- 30: Stapelprofil
- 32: Schaltelement
- 34: Ebene
- 36: Ebenenverbund
- 38: Rack
- 40: Modulverbinder
- 42: Stromschiene

## Patentansprüche

1. Akkumulatormodul (10) mit einer quaderförmigen Außenkontur mit sechs Flächen, von denen zwei einander gegenüberliegende Flächen als front- und rückseitige Anreihflächen (12, 14), zwei weitere einander gegenüberliegende Flächen als Bodenfläche und Deckelfläche (20) und die restlichen Flächen als Seitenflächen (22, 24) fungieren,
wobei ein Akkumulatormodul (10) über jeweils eine der Anreihflächen (12, 14) mit einem weiteren Akkumulatormodul (10) und einer von dessen Anreihflächen (12, 14) elektrisch und mechanisch kombinierbar ist,
wobei in der frontseitigen Anreihfläche (12) ein erstes Anschlussprofil (16) und in der rückseitigen Anreihfläche (14) ein zweites Anschlussprofil (18) gebildet ist und
wobei ein erstes Akkumulatormodul (10) mit einem weiteren Akkumulatormodul (10) durch Kombination des ersten Anschlussprofils (16) des ersten Akkumulatormoduls (10) mit dem zweiten Anschlussprofil (18) des weiteren Akkumulatormoduls (10) verbindbar ist,
wobei das erste Anschlussprofil (16) gegenüber einer Hüllfläche des Akkumulatormoduls (10) zurückgesetzt ist und
wobei das zweite Anschlussprofil (18) zum formschlüssigen Eingriff in ein in dieser Weise zurückgesetztes erstes Anschlussprofil (16) eines weiteren Akkumulatormoduls (10) ausgebildet ist,
wobei jede Anreihfläche (12, 14) einen Anschluss (26, 28) zum elektrisch leitenden Kontaktieren des Akkumulatormoduls (10) aufweist,
wobei die Anschlüsse (26, 28) symmetrisch bezüglich einer mittig durch die beiden Anreihflächen (12, 14) verlaufenden Mittellängsachse des Akkumulatormoduls (10) angeordnet sind und
wobei als Anschlüsse (26, 28) ein zumindest zweipoliges Kontaktelement oder eine Kombination jeweils zweier einpoliger Kontaktelemente fungiert.

2. Akkumulatormodul (10) nach Anspruchl,
wobei eine Randlinie des ersten und zweiten Anschlussprofils (16, 18) einer Randlinie des Akkumulatormoduls (10) entspricht.

3. Akkumulatormodul (10) nach einem der Ansprüche 1 oder 2,
wobei ein die Bodenfläche, die Deckelfläche (20) und die beiden Seitenflächen (22, 24) umfassendes Gehäuse ein Abschnitt eines Strangprofils ist.

4. Akkumulatormodul (10) nach einem der Ansprüche 1, 2 oder 3,
mit einem Stapelprofil (30) in der Bodenfläche und/oder der Deckelfläche (20).

5. System (38) mit einer Mehrzahl von Akkumulatormodulen (10) nach einem der vorangehenden Ansprüche,
wobei innerhalb des Systems die Akkumulatormodule (10) mittels einzelner Modulverbinder (40) elektrisch leitend verbindbar sind und
wobei das System eine Mehrzahl gleich langer kürzester Modulverbinder (40) und eine Mehrzahl untereinander ebenfalls jeweils gleich langer nächstlängerer Modulverbinder (40) umfasst.

6. System (38) nach Anspruch 5,
wobei als Modulverbinder (40) starre, lösbar mit jeweils zwei Akkumulatormodulen (10) verbindbare Modulverbinder (40) fungieren und
wobei jeder Modulverbinder (40) an seinen Enden Kontaktelemente trägt, die elektrisch und mechanisch mit den Anschlüssen (26, 28) jeweils eines Akkumulatormoduls (10) verbindbar sind.

7. Elektrisches Gerät mit zumindest einem Akkumulatormodul (10) nach einem der vorangehenden Ansprüche.

## Claims

1. Rechargeable battery module (10) having a box-shaped outer contour having six surfaces of which two are surfaces that are opposite one another and act as front and rear add-on surfaces (12, 14), two others are surfaces that are opposite one another and act as a bottom surface and a top surface (20), and the remaining surfaces act as side surfaces (22, 24),
wherein a rechargeable battery module (10) can be electrically and mechanically combined via one of the add-on surfaces (12, 14) with another rechargeable battery module (10) and one of the add-on surfaces (12, 14) thereof in each case,
wherein a first attachment profile (16) is formed in the front add-on surface (12) and a second attachment profile (18) is formed in the rear add-on surface (14), and
wherein a first rechargeable battery module (10) can be connected to another rechargeable battery module (10) by combining the first attachment profile (16) of the first rechargeable battery module (10) with the second attachment profile (18) of the other rechargeable battery module (10),
wherein the first attachment profile (16) is recessed with respect to an encasing surface of the rechargeable battery module (10) and
wherein the second attachment profile (18) is designed for interlocking engagement in a similarly recessed first attachment profile (16) of another rechargeable battery module (10),
wherein each add-on surface (12, 14) has a terminal (26, 28) for electrically conductively contacting the rechargeable battery module (10),
wherein the terminals (26, 28) are arranged symmetrically with respect to a central longitudinal axis of the rechargeable battery module (10) that extends centrally through the two add-on surfaces (12, 14), and
wherein an at least two-pole contact element or a combination of two single-pole contact elements in each case act as terminals (26, 28).

2. Rechargeable battery module (10) according to claim 1,
wherein an outline of the first and second attachment profiles (16, 18) corresponds to an outline of the rechargeable battery module (10).

3. Rechargeable battery module (10) according to either claim 1 or claim 2,
wherein a housing comprising the bottom surface, the top surface (20) and the two side surfaces (22, 24) is a portion of an extruded profile.

4. Rechargeable battery module (10) according to any of claims 1, 2 or 3,
comprising a stacking profile (30) in the bottom surface and/or the top surface (20).

5. System (38) comprising a plurality of rechargeable battery modules (10) according to any of the preceding claims,
wherein the rechargeable battery modules (10) can be electrically conductively connected within the system by means of individual module connectors (40), and
wherein the system has a plurality of shortest module connectors (40) of equal length and a plurality of next-longest module connectors (40) which are likewise of equal length with respect to one another.

6. System (38) according to claim 5,
wherein rigid module connectors (40) which can be releasably connected to two rechargeable battery modules (10) in each case act as module connectors (40), and
wherein each module connector (40) has contact elements at the ends thereof, which contact elements can be electrically and mechanically connected to the terminals (26, 28) of a rechargeable battery module (10) in each case.

7. Electrical device comprising at least one rechargeable battery module (10) according to any of the preceding claims.

## Revendications

1. Module d'accumulateur (10) comportant un contour extérieur parallélépipédique à six faces, dont deux faces opposées l'une à l'autre servent de faces de jonction avant et arrière (12, 14), deux autres faces opposées l'une à l'autre servent de face inférieure et de face supérieure (20), et les faces restantes servent de faces latérales (22, 24),
un module d'accumulateur (10) pouvant être combiné électriquement et mécaniquement avec un autre module d'accumulateur (10) et l'une de ses faces de jonction (12, 14) par l'intermédiaire de l'une des faces de jonction (12, 14) respectivement,
un premier profilé de raccordement (16) étant formé dans la face de jonction avant (12) et un second profilé de raccordement (18) étant formé dans la face de jonction arrière (14), et
un premier module d'accumulateur (10) pouvant être relié à un autre module d'accumulateur (10) en combinant le premier profilé de raccordement (16) du premier module d'accumulateur (10) au second profilé de raccordement (18) de l'autre module d'accumulateur (10),
le premier profilé de raccordement (16) étant en retrait par rapport à une face d'enveloppe du module d'accumulateur (10), et
le second profilé de raccordement (18) étant réalisé pour venir en prise par complémentarité de forme avec un premier profilé de raccordement (16) ainsi en retrait d'un autre module d'accumulateur (10),
chaque face de jonction (12, 14) présentant un raccordement (26, 28) servant à la mise en contact électriquement conductrice du module d'accumulateur (10),
les raccordements (26, 28) étant disposés symétriquement par rapport à un axe longitudinal central du module d'accumulateur (10), lequel axe s'étend au centre à travers les deux faces de jonction (12, 14), et
un élément de contact au moins bipolaire ou une combinaison de deux éléments de contact unipolaires respectivement servant de raccordements (26, 28).

2. Module d'accumulateur (10) selon la revendication 1,
dans lequel une ligne de bord du premier et du second profilé de raccordement (16, 18) correspond à une ligne de bord du module d'accumulateur (10).

3. Module d'accumulateur (10) selon l'une des revendications 1 ou 2,
dans lequel un boîtier comprenant la face inférieure, la face supérieure (20) et les deux faces latérales (22, 24) est une section d'un profilé extrudé.

4. Module d'accumulateur (10) selon l'une des revendications 1, 2 ou 3,
comportant un profilé d'empilage (30) dans la face inférieure et/ou la face supérieure (20).

5. Système (38) comportant une pluralité de modules d'accumulateur (10) selon l'une des revendications précédentes,
dans lequel, à l'intérieur du système, les modules d'accumulateur (10) peuvent être reliés de manière électriquement conductrice au moyen de connecteurs modulaires individuels (40), et le système comprenant une pluralité de connecteurs modulaires (40) les plus courts de longueur identique et une pluralité de connecteurs modulaires (40) plus longs suivants et respectivement également de longueur identique les uns par rapport aux autres.

6. Système (38) selon la revendication 5,
dans lequel des connecteurs modulaires (40) rigides et pouvant être reliés de manière amovible à deux modules d'accumulateur (10) respectivement servent de connecteurs modulaires (40), et
dans lequel chaque connecteur modulaire (40) supporte des éléments de contact au niveau de ses extrémités, lesquels peuvent être reliés électriquement et mécaniquement aux raccordements (26, 28) d'un module d'accumulateur (10) respectivement.

7. Appareil électrique comportant au moins un module d'accumulateur (10) selon l'une des revendications précédentes.
